# EUROPÄISCHE PATENTANMELDUNG

(11) **EP 2 283 764 A2**
(43) Veröffentlichungstag der Anmeldung: **16.02.2011**
(21) Anmeldenummer: 10171382.4
(22) Anmeldetag: 30.07.2010
(51) Int. Cl.: A47L 15/42

(54) **Geschirrspülmaschine mit einer Wasserflusssteuereinrichtung**

(30) Priorität: 11.08.2009 DE 102009028454
(71) Anmelder: BSH Bosch und Siemens Hausgeräte GmbH, 81739 München (DE)
(72) Erfinder: Gram, Markus, 86156 Augsburg (DE); Heisele, Bernd, 89567 Sontheim (DE); Wirth, Karl, 89415 Lauingen (DE)

(57) **Zusammenfassung**

Bei einer Geschirrspülmaschine mit einer Flüssigkeitsflusssteuereinrichtung (5), welche eine Flüssigkeitseinlassöffnung (19), mindestens eine Flüssigkeitsauslassöffnung (20, 21, 22) und eine drehbar gelagerte Verschlussanordnung (23, 24) aufweist, die wechselweise in eine von mehreren vorgesehenen Steuerpositionen bewegbar ist, um in einer der Steuerpositionen wenigstens eine der Flüssigkeitsauslassöffnung (20, 21, 22) zu verschließen, umfasst die Verschlussanordnung (23, 24) ein erstes Verschlusselement (23) mit einem Dichtungsabschnitt (25), der bei Einnahme der Steuerposition zum Verschließen einer der Flüssigkeitsauslassöffnung (22) durch eine Federkraft gegen die zu verschließende Flüssigkeitsauslassöffnung (22) gedrückt ist.

## Beschreibung

Die vorliegende Erfindung betrifft eine Geschirrspülmaschine, insbesondere Haushaltsgeschirrspülmaschine, mit einer Wasserflusssteuereinrichtung, welche eine Wassereinlassöffnung, mindestens eine Wasserauslassöffnung und eine drehbar gelagerte Verschlussanordnung, die wechselweise in eine von mehreren vorgesehenen Steuerpositionen bewegbar ist, um in einer der Steuerpositionen wenigstens eine der Wasserauslassöffnungen zu verschließen, aufweist.

Geschirrspülmaschinen mit einer Flüssigkeits-, insbesondere Wasserflusssteuereinrichtung sind aus der Praxis bekannt. So weist eine vorbekannte Geschirrspülmaschine eine Wasserflusssteuereinrichtung auf, welche als Wasserweiche mit einem Wassereinlass und mehreren Wasserauslässen ausgebildet ist. Dabei ist der Wassereinlass mit einer Umwälzpumpe verbunden, wobei jeder der Wasserauslässe mit einem Sprühelement einer Sprüheinrichtung der Geschirrspülmaschine in Verbindung steht.

Die Wasserweiche weist eine drehbeweglich gelagerte Verschlussanordnung auf, welche durch einen Antrieb in jeweils eine von mehreren vorgesehenen Steuerpositionen bewegbar ist. In jeder der Steuerpositionen ist eine Einzahl oder eine Mehrzahl der Wasserauslässe mit dem Wassereinlass verbunden. Auf diese Weise ist es möglich, Wasser zum Spülen von Geschirr mittels der Umwälzpumpe über ein einziges, selektiv ausgewähltes Sprühelement, beispielsweise über einen von mehreren rotierbaren Sprüharmen, oder über mehrere Sprühelemente gleichzeitig, in einen Spülbehälter der Geschirrspülmaschine zu sprühen, um so dort befindliches Geschirr zu reinigen. Im Vergleich zu Geschirrspülmaschinen ohne Wasserweiche, bei denen grundsätzlich sämtliche Sprühelemente gleichzeitig durch die Umwälzpumpe mit Wasser beaufschlagt werden, kann so eine Reduzierung der erforderlichen Wassermenge und, z. B. durch sprühelement-selektive Erhöhung des Sprühdrucks eine Verbesserung des Spülergebnisses erreicht werden.

Vorbekannte Wasserflusssteuereinrichtungen können in zwei Grundtypen eingeteilt werden. Beim ersten Grundtyp sind die Wasserauslassöffnungen, bezogen auf die Drehachse der Verschlussanordnung, radial angeordnet. Die Verschlussanordnung umfasst dabei ein topfförmiges Element, dessen zylinderförmige Außenwand den Wasserauslassöffnungen zugewandt ist. Diese Außenwand weist dabei mindestens eine Durchtrittsöffnung für Wasser auf, die bei Einnahme einer entsprechenden Steuerposition vor einer der Wasserauslassöffnungen positioniert ist, so dass ein Wasserfluss von der in das Innere des topfförmigen Elementes mündenden Wassereinlassöffnung zur Wasserauslassöffnung möglich ist. Weiterhin weist das topfförmige Element an seiner zylinderförmigen Wand wenigstens ein radial bewegliches Verschlusselement auf, das durch Bewegen der Verschlussanordnung in eine weitere Steuerposition vor die betreffende Auslassöffnung gebracht werden kann. Durch den im Inneren des topfförmigen Elements herrschenden Wasserdrucks wird dabei das Verschlusselement radial nach Außen gegen die Auslassöffnung gedrückt, so dass diese verschlossen ist.

Bei einer nach dem zweiten Grundtyp aufgebauten Wasserflusssteuereinrichtung sind die Wasserauslassöffnungen, bezogen auf die Rotationsachse der Verschlussanordnung, axial angeordnet. Die Verschlussanordnung einer derartigen Wasserflusssteuereinrichtung umfasst üblicherweise eine flach ausgebildete Verschlussscheibe, in die Durchtrittsöffnungen für Wasser eingearbeitet sind. Wird diese Verschlussscheibe in eine derartige Steuerposition bewegt, in der eine der Durchtrittsöffnungen mit einer der axialen Wasserauslassöffnungen korrespondiert, so ist ein Wasserfluss möglich. Wird die Verschlussscheibe jedoch in eine Position gebracht, in der ein flächiger Abschnitt der Verschlussscheibe der Wasserauslassöffnung gegenüber liegt, so wird der Wasserfluss unterbrochen. Die Dichtwirkung wird dabei dadurch erreicht, dass die Verschlussscheibe in axialer Richtung durch den auf der Einlassseite wirkenden Wasserdruck gegen die Auslassöffnung gedrückt wird.

Der wesentliche Nachteil bekannter Wasserflusssteuereinrichtungen besteht nun darin, dass trotz sorgfältiger Bearbeitung der Ränder der Auslassöffnungen und der an diesen Rändern anliegenden Dichtflächen des Verschlusselementes ein vollständiges Verschließen der Auslassöffnungen nicht gewährleistet ist. Hierdurch kommt es, wenn auch nur in geringem Maße, zu einem Durchtritt von Wasser durch die eigentlich geschlossene, abgedeckte Auslassöffnung. Dieses sogenannte Leckwasser steht dann an der eigentlich vorgesehenen Stelle des Wasserkreislaufes nicht zur Verfügung, was zu einer Minderung der Spülleistung sowie zu einem erhöhten Wasserverbrauch führen kann.

Die Aufgabe der vorliegenden Erfindung besteht darin, eine Geschirrspülmaschine, insbesondere Haushaltsgeschirrspülmaschine, mit einer Flüssigkeitsflusssteuereinrichtung bereitzustellen, bei der die Leckwasserverluste verringert sind.

Die Aufgabe wird bei einer Geschirrspülmaschine, insbesondere Haushaltsgeschirrspülmaschine, der eingangs genannten Art dadurch gelöst, dass die Verschlussanordnung ein erstes Verschlusselement mit einem Dichtungsabschnitt umfasst, der bei Einnahme der Steuerposition zum Verschließen einer der Flüssigkeitsauslassöffnungen durch eine Federkraft gegen die zu verschließende Flüssigkeitsauslassöffnung gedrückt ist.

Erfindungsgemäß addieren sich die Federkraft und die durch den Flüssigkeitsdruck, insbesondere Wasserdruck, erzeugte Kraft, so dass der Dichtungsabschnitt nunmehr mit einer höheren Kraft gegen die Flüssigkeitsauslassöffnung gedrückt wird. Hierdurch kann die Abdichtung der Flüssigkeitsauslassöffnung, insbesondere bei geringerem Flüssigkeitsdruck, verbessert werden. So kann durch die erhöhte Anpresskraft insbesondere eine elastische Anpassung des Dichtungsabschnittes und der Ränder der Flüssigkeitsauslassöffnung aneinander bewirkt werden.

Zudem werden durch die Erfindung Probleme gelöst, welche bei vorbekannten Wasserflusssteuereinrichtungen dadurch entstehen, dass der Dichtungsabschnitt bei fehlendem Wasserdruck in eine von der Wasserauslassöffnung beabstandete Position gelangt. Dies tritt regelmäßig dann auf, wenn die Umwälzpumpe, beispielsweise während einer Bewegung der Verschlussanordnung von einer Steuerposition in eine andere Steuerposition, abgeschaltet ist. Wird nun die Umwälzpumpe wieder eingeschaltet, so ist trotz des wiedereinsetzenden Wasserdrucks die vorgesehene Bewegung des Dichtungsabschnitts in Richtung der Auslassöffnung in vielen Fällen durch Auftreten von Reibung oder durch ein Verkannten des Dichtungsabschnittes verschlechtert oder verhindert, so dass der Dichtungsabschnitt in einer beabstandeten Position zur Wasserauslassöffnung verbleibt und daher die gewünschte Dichtwirkung nicht eintritt.

Die Erfindung vermeidet dieses durch die ständig wirkende Federkraft, welche von vorneherein verhindert, dass der Dichtungsabschnitt in eine von der Flüssigkeitsauslassöffnung beabstandete Position gelangt. Vielmehr liegt der Dichtungsabschnitt ständig, und auch bei fehlendem Flüssigkeitsdruck, am Randungsbereich der Flüssigkeitsauslassöffnung an, wenn das erste Verschlusselement in eine Steuerposition gebracht wurden ist, in der dieses die dieser Steuerposition zugeordnete Flüssigkeitsauslassöffnung abdeckt.

Ein weiterer Vorteil ergibt sich daraus, dass die Federkraft auch während einer Drehbewegung der Verschlussanordnung wirkt. So führt das federelastische Andrücken des Dichtungsabschnittes an die Auslassöffnung, während einer Relativbewegung zueinander, zu einer Reinigung der Ränder der Auslassöffnung und des Dichtungsabschnittes. Auf diese Weise können Undichtigkeiten verhindert werden, welche durch zwischen den Rändern der Auslassöffnung und dem Dichtungsabschnitt angelagerte Verschmutzungen hervorrufen könnten.

Insgesamt kann in vorteilhafter Weise der Anteil von Leckwasser durch die vorliegende Erfindung verringert werden. Dabei kann aufgrund der Verringerung von Undichtigkeiten im Bereich der Flüssigkeitsflusssteuereinrichtung die Geschirrspülmaschine mit einer geringeren Menge von Spülflüssigkeit, insbesondere Wasser, betrieben werden. Gleichzeitig kann die Spülleistung gesteigert werden.

Gemäß einer zweckmäßigen Weiterbildung der Erfindung weist das erste Verschlusselement mindestens einen federnden Abschnitt, insbesondere einen freien Endabschnitt, auf, der bei Einnahme der Steuerposition zum Verschließen der Auslassöffnung elastisch vorgespannt ist, um so die Federkraft zu erzeugen. Auf diese Weise kann auf eine separate Feder zur Erzeugung der Federkraft verzichtet werden, so dass sich eine einfache Konstruktion ergibt.

Gemäß einer zweckmäßigen Weiterbildung der Erfindung kann der elastisch federnde Abschnitt des ersten Verschlusselements in Form eines gebogenen Laschenabschnitts, Streifen- oder Lamellenabschnitts ausgebildet sein, wenn das erste Verschlusselement in das Gehäuse der Flusssteuereinrichtung betriebsbereit eingebaut ist. Dadurch lässt sich vom federnden Abschnitt des ersten Verschlusselements insbesondere auch einer gekrümmten oder gebogenen Kontur, wie z.B. Rundkontur nachfolgen, d. h. eine konturnachfolgende oder konturangepasste Abdichtung bewirken, wenn z. B. die jeweilig abzudeckende und abzudichtende Flüssigkeitsauslassöffnung in einem gekrümmt oder bogenförmig verlaufenden Gehäuseabschnitt der Flüssigkeitsflusssteuereinrichtung vorgesehen ist. Der federnde Abschnitt des ersten Verschlusselements kommt dabei "satt" zum Anliegen an einer Randzone an die Flüssigkeitsauslassöffnung in dem gebogen verlaufenden Gehäuseabschnitt der Flüssigkeitsflussteuereinrichtung.

Gemäß einer zweckmäßigen Weiterbildung der Erfindung kann das erste Verschlusselement insbesondere eine Nabe aufweisen, welche mit einer Welle eines Antriebs drehfest, vorzugsweise formschlüssig, verbunden ist. Auf diese Weise kann auf Halteelemente, wie beispielsweise das eingangs erwähnte topfförmige Element, verzichtet werden.

Nach einer besonders bevorzugten Weiterbildung der Erfindung kann das Verschlusselement insbesondere einstückig ausgebildet sein. Unter einer einstückigen Ausbildung wird dabei verstanden, dass das Verschlusselement aus einem einzigen urgeformten Element besteht. Auf diese Weise vereinfacht sich die Herstellung der erfindungsgemäßen Geschirrspülmaschine. Beispielsweise ist es nicht erforderlich, dass Dichtungsabschnitt, federnder Abschnitt und Nabe getrennt gefertigt und anschießend miteinander verbunden werden.

Gemäß einer vorteilhaften Weiterbildung der Erfindung kann für den Dichtungsabschnitt, den federnden Abschnitt, den Versteifungsabschnitt und/oder die Nabe im Wesentlichen Kunststoff verwendet werden. Kunststoffe sind preiswert verfügbar und in einfacher Weise formbar. Besonders vorteilhaft ist es, wenn das Verschlusselement insgesamt im Wesentlichen aus Kunststoff besteht.

Bei einem vorteilhaften Ausführungsbeispiel der Erfindung kann eine durch das erste Verschlusselement verschließbare Auslassöffnung bezogen auf die Rotationsachse der Verschlussanordnung der Flüssigkeitsflusssteuereinrichtung radial angeordnet sein. Eine derartige Ausbildung der Flüssigkeitsflusssteuereinrichtung ist insbesondere dann von Vorteil, wenn der Abfluss von Flüssigkeit wie z. B. Wasser oder Spülflüssigkeit ebenfalls im Wesentlichen in radialer Richtung bezogen auf die Rotationsachse der Verschlussanordnung der Flusssteuereinrichtung erfolgt.

In einem vorteilhaften Ausführungsbeispiel der Erfindung kann zusätzlich oder unabhängig hiervon die durch das erste Verschlusselement verschließbare Auslassöffnung bezogen auf die Rotationsachse der Verschlussanordnung der Flusssteuereinrichtung axial angeordnet sein. Eine derartige Gestaltung ist insbesondere dann von Vorteil, wenn der Abfluss von Wasser im Wesentlichen in axialer Richtung bezogen auf die Rotationsachse der Verschlussanordnung der Flusssteuereinrichtung erfolgt.

Gemäß einer bevorzugten Weiterbildung der Erfindung kann die Flüssigkeitsflusssteuereinrichtung wenigstens eine radial angeordnete Auslassöffnung und wenigstens eine axial angeordnete Auslassöffnung aufweisen. Auf diese Weise kann die Wasserflusssteuereinrichtung besonders gut an die übrigen Komponenten der Geschirrspülmaschine angepasst werden. So können in vielen Fällen die Leitungen des hydraulischen Systems der Geschirrspülmaschine besonders kurz ausgeführt werden. Dies gilt gerade dann, wenn aus konstruktiven Gründen der Abfluss von Wasser sowohl in axialer Richtung als auch in radialer Richtung bezogen auf die Rotationsachse der Verschlussanordnung erfolgen soll.

Nach einer zweckmäßigen Weiterbildung der Erfindung kann die Verschlussanordnung das erste Verschlusselement zum Verschließen einer radial angeordneten Auslassöffnung und ein zweites Verschlusselement zum Verschließen einer axial angeordneten Auslassöffnung aufweisen. Zwar ist es denkbar, mit nur einem Verschlusselement sowohl radial angeordnete als auch axial angeordnete Auslassöffnungen zu steuern, jedoch ermöglicht die Verwendung von getrennten Verschlusselementen eine optimale Anpassung der Verschlusselemente an die jeweilige Aufgabe. Hierdurch kann eine besonders gute Abdichtung sämtlicher Auslassöffnungen gewährleistet werden.

Gemäß einer zweckmäßigen Weiterbildung der Erfindung kann das zweite Verschlusselement insbesondere als flache Verschlussscheibe mit Durchtrittsöffnungen für Wasser ausgebildet. Es ergibt sich so eine besonders einfache und platzsparende Konstruktion.

Gemäß einer zweckmäßigen Weiterbildung der Erfindung ist den Auslassöffnungen jeweils ein Anschlussstutzen zugeordnet, wobei der Anschlussstutzen der axial angeordneten Auslassöffnung in einem Spülbehälter der Geschirrspülmaschine und der Anschlussstutzen der radial angeordneten Auslassöffnung außerhalb des Spülbehälters angeordnet ist. Anschlussstutzen ermöglichen eine einfache Verbindung der Wasserflusssteuereinrichtung mit einer Wasserleitung zum Weitertransport des Wassers. Derartige Leitungen können sowohl innerhalb des Spülbehälters als auch außerhalb des Spülbehälters der Geschirrspülmaschine verlaufen. Die erfindungsgemäße Anordnung der Anschlussstutzen ermöglicht dabei in einfacher Weise den Anschluss von innerhalb des Spülbehälters und von außerhalb des Spülbehälters angeordneten Leitungen. Die Leitungen selbst müssen dabei nicht durch Öffnungen im Spülbehälter hindurchgeführt werden. Die Anschlussstutzen können als separate Teile mit dem Gehäuse der Flüssigkeitsflusssteuereinrichtung mechanisch verbunden sein. Ggf. können sie auch einstückig am Gehäuse der Flussteuereinrichtung angeformt sein.

Der Zweck der Erfindung besteht insbesondere darin, die Flüssigkeitsverteilung von Spülflüssigkeit, insbesondere Wasser in unterschiedliche Sprühebenen, Richtungen oder Zonen einer Geschirrspülmaschine zu verbessern.

Herkömmliche bekannte Systeme zur Wasserverteilung im Hydraulikkreislauf bestehen größten Teils aus einer flachen Scheibe, die axial dichtende Abgänge im Flüssigkeitskreislauf öffnen bzw. verschließen oder aus radial dichtenden beweglichen Klappen.

Die Erfindung stellt ein radial und/oder axial dichtendes Flüssigkeits- bzw. Wasserweichensystem bereit. Die radiale Dichtung wird in vorteilhafter Weise mittels einem im Wasserweichengehäuse vorgespannten Federelement, insbesondere einer Kunststofffeder, hergestellt. Die innenliegende Feder hat vorzugsweise eine formschlüssige Verbindung zur Achse eines Mikromotors und kann von Außen in eine von mehreren Steuerpositionen bewegt werden. Durch eine geeignete Vorspannung der Feder im Einbauzustand wird eine nach Außen, insbesondere radial nach außen, wirkende Kraftkomponente erzeugt und somit die Dichtheit an den gewünschten Abgängen der Wasserweiche verbessert. Durch den im Innern der Wasserweiche wirkenden Wasserdruck wird die Dichtwirkung unterstützt. Insbesondere in Kombination mit einem axialen Dichtsystem, beispielsweise mit einer flachen Scheibe, entsteht in vorteilhafter Weise ein sehr flexibles Verteilungssystem mit radialen Abgängen, z. B für die Beschickung von ein oder mehreren Spülzonen mindestens einer unteren Sprühebene des Spülbehälters der Geschirrspülmaschine mit Spülflüssigkeit, insbesondere Wasser, und mit axialen Abgängen zur Beschickung von ein oder mehreren Spülzonen in ein oder mehreren oberen Sprühebenen des Spülbehälters jeweils mittels eines Zuführrohres. Ggf. können in einer alternativen Ausführungsvariante mit den ein oder mehreren radialen Abgängen ein oder mehrere fest angeordnete Sprühelemente und mit den axialen Abgängen ein oder mehrere rotierende Sprüharme jeweils über ein Zuführrohr mit Spülflüssigkeit beschickt werden. Je nach Gestaltung der Feder können ein oder mehrere Abgänge gleichzeitig geöffnet oder geschlossen sein.

Die erfindungsgemäße Flüssigkeitsflusssteuereinrichtung weist eine vom Flüssigkeits-, insbesondere Wasserdruck, größtenteils unabhängige, verbesserte Dichtwirkung auf, da das Federelement durch seine die Federvorspannung mit einer vorzugsweise permanent vorhandene Anpresskraft zusätzlich zur Flüssigkeitsdruckkraft an die jeweilige Randzone rundum die jeweilige Auslassöffnung gedrückt wird, wenn das Federelement in eine Schließstellung vor diese Auslassöffnung abdeckend gebracht worden ist. Hierdurch ergibt sich die Möglichkeit der Spülflüsigkeits-, insbesondere Wasserreduzierung, durch geringere Leckagewerte und die Möglichkeit zur Steigerung der Spülleistung. Zudem ist die erfindungsgemäße Flüssigkeitsflusssteuereinrichtung ein sehr flexibles Verteilersystem, bei dem radiale Abgänge mit axialen Abgängen kombiniert sein können, um so mehrere Sprühelement in einfacher Weise ansteuern zu können.

Sonstige Aus- und Weiterbildungen der Erfindung sind in den Unteransprüchen wiedergegeben.

Die vorstehend erläuterten und/oder in den Unteransprüchen wiedergegebenen vorteilhaften Aus- und Weiterbildungen der Erfindung können dabei einzeln oder aber auch in beliebiger Kombination miteinander bei der erfindungsgemäßen Geschirrspülmaschine zur Anwendung kommen.

Die Erfindung und ihre Weiterbildungen sowie deren Vorteile werden nachfolgend anhand von Zeichnungen näher erläutert. Es zeigen:
- **Figur 1**: eine schematisierte Ansicht eines vorteilhaften Ausführungsbeispiels einer erfindungsgemäßen Geschirrspülmaschine mit einer Flüssig- keitsflusssteuereinrichtung,
- **Figur 2**: eine Schnittdarstellung der Flüssigkeitsflusssteuereinrichtung bei seitlicher Betrachtung und
- **Figur 3**: eine Schnittdarstellung einer Flüssigkeitsflusssteuereinrichtung von unten betrachtet.

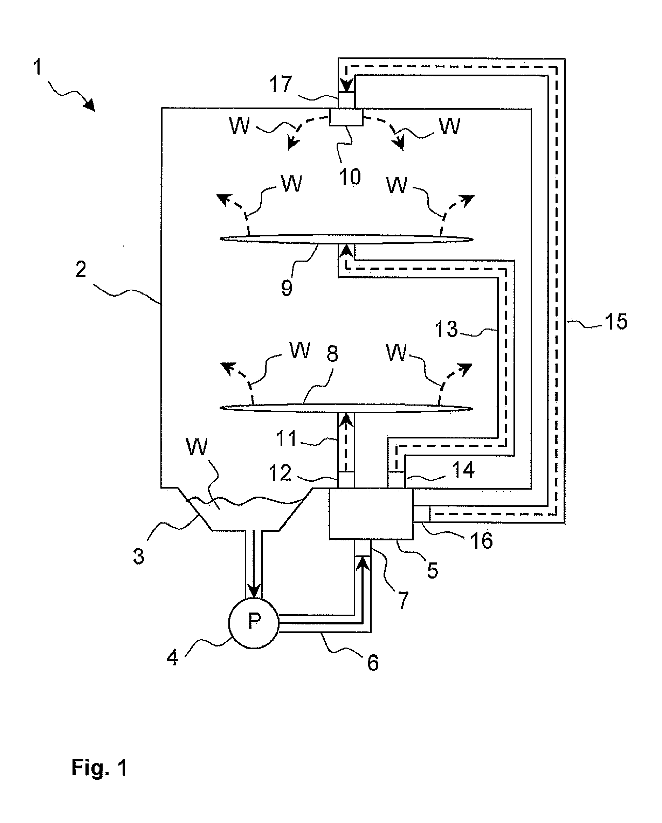

Elemente mit gleicher Funktion und Wirkungsweise sind in den Figuren 1 mit 3 jeweils mit denselben Bezugszeichen versehen.

Figur 1 zeigt eine schematisierte Darstellung eines vorteilhaften Ausführungsbeispiels einer erfindungsgemäßen Geschirrspülmaschine 1, insbesondere HaushaltsGeschirrspülmaschine, wobei lediglich die für das Verständnis der Erfindung erforderlichen Komponenten gezeigt und erläutert sind.

Die Geschirrspülmaschine 1 weist einen Spülbehälter 2 auf, in den zu reinigendes Geschirr eingebracht werden kann. Bei der Reinigung des nicht dargestellten Geschirrs wird Wasser W verwendet, welches im Verlauf eines durch einen Bediener ausgewählten Spülprogramms phasenweise mit Reinigungssubstanzen oder Hilfssubstanzen, wie beispielsweise Klarspüler, versetzt sein kann.

Das über einen nicht gezeigten Frischwasseranschluss in den Spülbehälter 2 eingebrachte Wasser W sammelt sich aufgrund von Schwerkraft in einer Bodenwanne 3 des Spülbehälters 2. Um das Wasser W während eines Spülganges, beispielsweise während eines Vorspülganges, eines Reinigungsganges oder eines Klarspülganges, im Spülbehälter 2 umwälzen zu können, steht eine Pumpe 4 mit der Bodenwanne 3 in Verbindung. Die Pumpe 4 ermöglicht es, wie durch die durchgezogenen Pfeile symbolisiert, aus der Bodenwanne 3 stammendes Wasser W zu einer Flüssigkeits- , hier insbesondere Wasserflusssteuereinrichtung 5 zu pumpen. Hierzu ist eine Wasserleitung 6 vorgesehen, welche an einen einlassseitigen Anschlussstutzen 7 der Wasserweiche 5 angeschlossen ist.

Die Wasserflusssteuereinrichtung 5 ist als Wasserweiche 5 ausgebildet, welche es ermöglicht, das Wasser W wahlweise über einen unteren rotierbaren Sprüharm 8, einen oberen rotierbaren Sprüharm 9 und/oder eine feststehende Sprüheinrichtung 10 wie z. B. eine Dachbrause in den Spülbehälter 2 zu sprühen, was durch gestrichelte Pfeile dargestellt ist.

Um den unteren Sprüharm 8 mit Spülflüssigkeit bzw. Wasser W beschicken zu können, ist eine Wasserleitung 11 vorgesehen, welche als Zuführrohr 11 ausgebildet ist und welche vollständig im Inneren des Spülbehälters 2 verläuft. Der Anschluss des Zuführrohres 11 an die Wasserweiche 5 ist dadurch erleichtert, dass die Wasserweiche 5 einen Anschlussstutzen 12 aufweist, der in das Innere des Spülbehälters 2 hineinragt. Eine weitere Wasserleitung 13, welche zum Beschicken des oberen Sprüharmes 9 mit Wasser dient, ist an einen weiteren Anschlussstutzen 14 der Wasserweiche 5 anschlossen, wobei die weitere Wasserleitung 13 und der Anschlussstutzen 14 ebenfalls im Inneren des Spülbehälters 2 angeordnet sind.

Im Ausführungsbeispiel der Figur 1 sind die übrigen Bestandteile der Wasserweiche 5 außerhalb des Spülbehälters angeordnet. Die einstückig mit einem Gehäuse der Wasserweiche 5 ausgebildeten Anschlussstutzen 12 und 14 ragen jeweils durch eine Öffnung im Boden des Spülbehälters 2 hindurch. Die Wasserleitungen 11 und 13 selbst müssen jedoch nicht durch den Spülbehälter 2 hindurchgeführt werden. Auf diese Weise vereinfacht sich die Montage der Geschirrspülmaschine 1, da die Wasserweiche 5 von Außen platziert und befestigt werden kann und anschließend die Wasserleitungen 11 und 13 im Inneren des Spülbehälters 2 montiert werden können. Es sind also keine Montagetätigkeiten erforderlich, bei denen gleichzeitig innerhalb und außerhalb des Spülbehälters 2 gearbeitet werden muss. Zudem können die Wasserleitungen 11 und 13 besonders kurz ausgeführt werden. Während in Figur 1 die Wasserweiche 5 an der Unterseite des Bodens des Spülbehälters 2 anliegt, könnte die Wasserweiche 5 in einer Öffnung des Bodens angeordnet sein. Dann wären individuelle Öffnungen für die Anschlussstutzen 12 und 14 entbehrlich.

Die Wasserweiche 5 ist so angeordnet, dass eine außerhalb des Spülbehälters 2 vorgesehene dritte Wasserleitung 15 über einen außerhalb des Spülbehälters positionierten Anschlussstutzen 16 mit der Wasserweiche 5 verbunden werden kann. Eine außerhalb des Spülbehälters 2 angeordnete Wasserleitung 15 kann, wie in Figur 1 gezeigt, dazu dienen, ein an der Decke des Spülbehälters 2 angeordnetes Sprühelement 10 mit einem außerhalb des Spülbehälters 2 angeordneten Anschlussstutzen 17, mit Wasser W zu beschicken. Die Wasserleitung 15 verläuft vollständig außerhalb des Spülbehälters, muss also nicht durch eine Wand des Spülbehälters 2 hindurchgeführt werden, so dass sich die Montage der Geschirrspülmaschine 1 insgesamt einfach gestaltet. Die Wasserleitung bzw. der Wasserkanal 15 kann in einer alternativen Ausführungsvariante (hier nicht dargestellt) ggf. auch am Behälterboden oder unterhalb des Behälterbodens zu einer dort angeordneten speziellen Sprühzone führen.

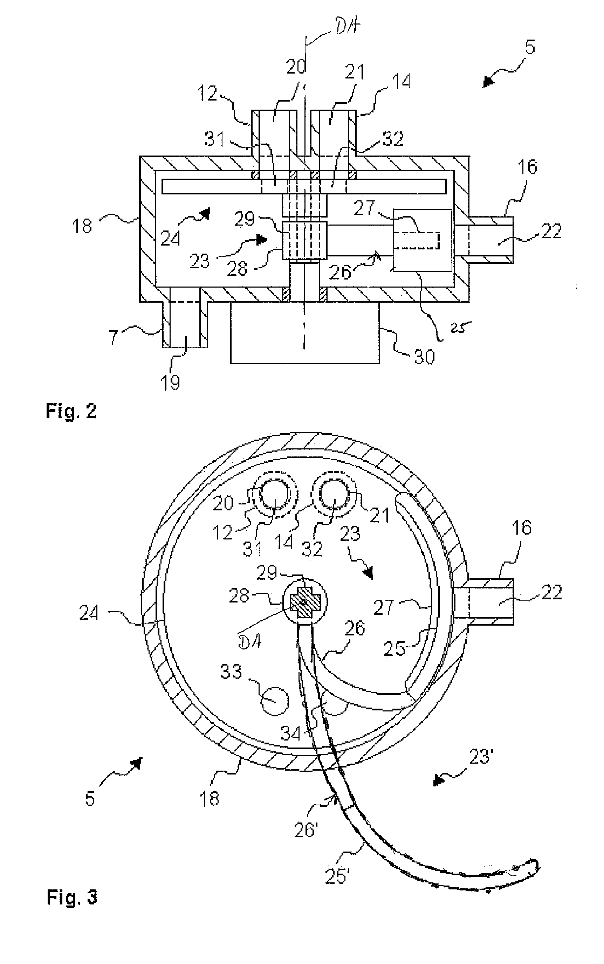

Figur 2 zeigt eine Seitenansicht der Wasserweiche 5, wobei ein Gehäuse 18 der Wasserweiche 5 geschnitten dargestellt ist. Das Gehäuse 18 ist, insbesondere einstückig, mit dem einlassseitigen Anschlussstutzen 7 verbunden. Dabei dient der einlassseitige Anschlussstutzen 7 dazu, die in Figur 1 gezeigte Wasserleitung 6 anzuschließen, um durch die im Inneren des Anschlussstutzens 7 angeordnete Einlassöffnung 19 Spülflüssigkeit, insbesondere Wasser in das Innere des Gehäuses 18 leiten zu können. Weiterhin ist das Gehäuse 18 insbesondere einstückig mit den auslassseitigen Anschlussstutzen 12, 14 und 16 verbunden, welche jeweils eine Auslassöffnung 20, 21, bzw. 22 umschließen, durch welche Wasser aus dem Gehäuse 18 ausgeleitet werden kann. Das ansonsten wasserdichte Gehäuse 18 kann als Kunststoffteil, insbesondere als Spritzgussteil, ausgebildet sein.

Um den Wasserfluss durch die Auslassöffnungen 20, 21 und 22 steuern zu können, ist eine drehbeweglich gelagerte Verschlussanordnung 23, 24 vorgesehen. Dabei sind, bezogen auf die Drehachse DA der Verschlussanordnung 23, 24, die Auslassöffnungen 20 und 21 axial und die Auslassöffnung 22 radial angeordnet. Die Anordnung und die Anzahl der Anschlussstutzen 12, 14 und 16 und der zugehörigen Auslassöffnungen 20, 21 und 22 ist als Beispiel zu verstehen. Es sind auch andere Ausführungsbeispiele möglich.

Die in axiale Richtung (bezogen auf die Drehachse DA) weisenden auslassseitigen Anschlussstutzen 12 und 14 dienen dem Anschluss der in Figur 1 gezeigten Wasserleitungen 11 und 13, welche im Innern des in Figur 1 gezeigten Spülbehälters 2 angeordnet sind. Der in radiale Richtung (bezogen auf die Drehachse DA) weisende auslassseitige Anschlussstutzen 16 dient weiterhin dem Anschluss der ebenfalls in Figur 1 gezeigten Wasserleitung 15, welche außerhalb des Spülbehälters 2 verläuft.

Die Verschlussanordnung 23, 24 ist durch Drehen in jeweils eine von verschiedenen Steuerpositionen bewegbar, wobei je nach Steuerposition alle Auslassöffnungen 20, 21, 22, zwei der Auslassöffnungen 20, 21, 22 oder selektiv nur eine der Auslassöffnungen 20, 21, 22 geöffnet ist. Es kann auch eine Steuerposition vorgesehen sein, bei der sämtliche Auslassöffnungen geschlossen sind. In vielen Fällen kann jedoch hierauf verzichtet werden, da zum vollständigen Unterbinden des Wasserflusses auch die in Figur 1 gezeigte Umwälzpumpe 4, welche mit der Einlassöffnung 19 in Verbindung steht, abgeschaltet werden kann.

Die Verschlussanordnung 23, 24 umfasst ein erstes Verschlusselement 23, welches je nach eingenommener Steuerposition die radiale Auslassöffnung 22 öffnet oder schließt. Dabei zeigt Figur 2 die Verschlussanordnung 23, 24 in einer ersten Steuerposition, bei der die Auslassöffnung 22 durch das erste Verschlusselement 23 verschlossen ist. Das erste Verschlusselement 23 weist hierzu einen Dichtungsabschnitt 25 auf, der bei Einnahme einer entsprechenden Steuerposition durch eine Federkraft gegen die radiale Auslassöffnung 22 gedrückt wird. Gegebenenfalls wird der Dichtungsabschnitt 25 bei Einnahme dieser Steuerposition zusätzlich durch einen im Inneren des Gehäuse 18 der Wasserweiche 5 herrschenden Wasserdruck gegen die radiale Auslassöffnung 22 gedrückt. Eine äußere Fläche des Dichtungsabschnittes 25 liegt dabei so an dem nach Innen ins Gehäuse der Wasserweiche weisenden Rand ringsum die radiale Auslassöffnung 22 an, dass diese sicher verschlossen ist.

Das erste Verschlusselement 23 weist einen federnden Abschnitt 26 auf, der im dargestellten Einbauzustand elastisch vorgespannt ist, um so die Federkraft zu erzeugen, welche den Dichtungsabschnitt 25 radial nach Außen drückt.

Um eine sichere Abdichtung der radialen Auslassöffnung 22 zu gewährleisten, ist der Dichtungsabschnitt 25 zweckmäßigerweise selbst ebenfalls als Teilabschnitt des federnden Abschnitts 26 ausgebildet, so dass eine Konturanformung des Dichtungsabschnitts 25 beziehungsweise der daran ausgebildeten Dichtungsfläche an die Konturierung, insbesondere Rundkontur, des Gehäuses der Wasserweiche im Bereich der Auslassöffnung 22 ermöglicht ist. Alternativ kann es ggf. auch zweckmäßig sein, wenn der Dichtungsabschnitt 25 relativ biegesteif ausgebildet ist. Hierzu kann auf der der Auslassöffnung 22 abgewandten Seite des Dichtungsabschnittes 25 ein Versteifungsabschnitt 27 vorgesehen sein, das in der Figur 2 gestrichelt eingezeichnet ist.

Das freie Ende des federnden Abschnittes 26 weist hier im Ausführungsbeispiel den Dichtungsabschnitt 25 auf, wohingegen sein anderes Ende mit einer drehfest auf einer Welle 29 angeordneten Nabe 28 verbunden ist. Der Dichtungsabschnitt 25 ist hier also einteiliger, einstoffiger Bestandteil des federnden Abschnitts und vorzugsweise aus demselben federelastischen Werkstoff, insbesondere Kunststoff, hergestellt wie der federnde Abschnitt 26.

Das zweite Verschlusselement 24 ist zum Verschließen beziehungsweise Öffnen der axialen Auslassöffnungen 20 und 21 vorgesehen und als flache Verschlussscheibe ausgebildet.

Die Verschlussscheibe 24 ist ebenfalls auf der Welle 29 gelagert. Sowohl das erste Verschlusselement 23 als auch das zweite Verschlusselemente 24 sind auf einem Abschnitt der Welle 29 mit einem z. B. kreuzförmigen Querschnittsprofil angeordnet. Hierdurch ergibt sich eine formschlüssige und drehfeste Verbindung. Wenn also die Welle 29 gedreht wird, so drehen sich auch das erste Verschlusselement 23 und das zweite Verschlusselement 24.

Ein zylinderförmiger Abschnitt der Welle 29 dient einerseits der axialen Führung der mit einem Axialspiel auf dem profilierten Abschnitt der Welle 29 angeordneten Verschlusselemente 23 und 24 und andererseits der Verbindung mit dem außerhalb des Gehäuses 18 angeordneten Antriebs 30. Dazu ist der zylinderförmige Abschnitt der Welle 29 durch eine mit einer Dichtung versehenen Öffnung im Gehäuse 18 hindurchgeführt. Der Antrieb 30 kann als Elektromotor ausgebildet sein, der durch eine nicht gezeigte Steuerung der Geschirrspülmaschine steuerbar ist.

Die Verschlussscheibe 24 weist Durchtrittsöffnungen 31 und 32 auf, die, wenn sie mit den axialen Auslassöffnungen 20 und 21 korrespondieren, einen entsprechenden Wasserfluss in axialer Richtung ermöglichen. Bei der in Figur 2 gezeigten ersten Steuerposition korrespondiert die Durchtrittsöffnung 31 mit der axialen Auslassöffnung 20 und die Durchtrittsöffnung 32 mit der axialen Auslassöffnung 21, so dass Wasser bzw. Spülflüssigkeit durch beide Auslassöffnungen 20 und 21 geleitet werden kann.

Weiterhin ist eine nicht gezeigte zweite Steuerposition vorgesehen, in welcher die Durchtrittsöffnung 32 mit der Auslassöffnung 20 korrespondiert und die Auslassöffnung 21 durch einen flächigen Abschnitt der Verschlussscheibe 24 verschlossen ist. Ebenso ist eine dritte Steuerposition vorgesehen, bei der die Durchtrittsöffnung 31 mit der Auslassöffnung 21 korrespondiert und die Auslassöffnung 20 verschlossen ist. Wird die Verschlussanordnung 23 und 24 jedoch in eine vierte Steuerposition gedreht, bei der beide axialen Auslassöffnungen 20 und 21 einem massiv ausgeführten Flächenabschnitt der Verschlussscheibe 24 gegenüberliegen, so ist der Wasserfluss vollständig unterbrochen. Um eine gute Dichtwirkung der Verschlussscheibe 24 zu gewährleisten, können an den Rändern der Auslassöffnungen 20 und 21, wie in Figur 2 angedeutet, Dichtungswulste, beispielsweise aus elastischem Material wie Gummi, vorgesehen sein.

Figur 3 zeigt eine Untersicht der Wasserweiche 5, wobei sich die Verschlussanordnung 23, 24 in der in Figur 2 gezeigten ersten Steuerposition befindet. Dabei ist sowohl das Gehäuse 18 als auch die Welle 29 geschnitten dargestellt. Auf diese Weise sind das erste Verschlusselement 23 und das zweite Verschlusselement 24 von unten her sichtbar.

Das erste Verschlusselement 23 ist in durchgezogenen Strichen in seiner Einbaulage dargestellt. Demgegenüber ist in strichpunktierten Linien zum Vergleich ein erstes Verschlusselement 23' dargestellt, bei dem der federnde Abschnitt 26' nicht vorgespannt ist. Der federnde Abschnitt 26' nimmt daher eine gestrecktere Form, d. h. weniger gebogene Lage als im Einbauzustand ein. Auch sein Dichtungsabschnitt 25' an seinem freien Ende weist eine gestrecktere, insbesondere geradere Form oder Kontur als in seiner Einbaulage auf.

In der Untersicht der Figur 3 ist erkennbar, dass sich die Außenseite des Dichtungsabschnittes 25 des ersten Verschlusselements 23 aufgrund seiner Federelastizität bzw. Biegsamkeit des ersten Verschlusselementes 23 an die Innenseite der Wandung des Gehäuses 18 eng anschmiegt, d. h. dessen Innenwandkonturierung nachfolgt bzw. diese annimmt, wenn das federelastische Element 25, 26 unter radial nach außen wirkender Federspannung wie ein Teilabschnitt einer Federspirale in das Gehäuse 18 der Wasserweiche eingespannt wird, so dass die radiale Auslassöffnung 22 weitgehend hermetisch dicht verschlossen werden kann, wenn der Dichtungsabschnitt 25 die radiale Auslassöffnung 22 von innen her abbedeckt. Die Erstreckung des Dichtungsabschnittes 25 in Umfangsrichtung ist dabei so gewählt, dass die Auslassöffnung 22 auch dann verschlossen ist, wenn die Verschlussanordnung 23, 24 in die oben beschriebene zweite Steuerposition, bei der die Durchtrittsöffnung 32 mit der axialen Auslassöffnung 20 korrespondiert, gedreht wird. In dieser zweiten Steuerposition ist nur die Auslassöffnung 20 geöffnet. Die Auslassöffnungen 21 und 22 sind geschlossen. Der Dichtungsabschnitt 25 ist ferner so ausgebildet, dass die Auslassöffnung 22 auch dann geschlossen ist, wenn die Verschlussanordnung 23, 24 in die oben beschriebene dritte Steuerposition, bei der die Durchtrittsöffnung 31 mit der axialen Auslassöffnung 21 korrespondiert, gedreht wird. In dieser dritten Steuerposition ist lediglich die Auslassöffnung 21 geöffnet.

Die Verschlussscheibe 24 weist weitere Durchtrittsöffnungen 33 und 34 auf, um eine der Auslassöffnungen 20, 21 oder beide Auslassöffnungen 20, 21 bei gleichzeitig geöffneter radialer Auslassöffnung 22 zu öffnen. Hierzu sind jeweils eine fünfte, eine sechste und eine siebte Steuerposition vorgesehen, bei denen die Verschlussanordnung 23, 24 jeweils um 180° gegenüber der ersten, der zweiten bzw. der dritten Steuerposition gedreht ist.

Dadurch, dass das erste Verschlusselement als federelastisches Abdeckelement ausgebildet ist, das elastisch verformbar ist, unter Federvorspannung im Gehäuse der Wasserweiche bzw. Flüssigkeitsweiche untergebracht ist, wird es unter Federkraft gegen die jeweilig abzudeckende bzw. zu verschließende Flüssigkeitsöffnung gepresst. Durch seine elastische Verformbarkeit kann es sich der Kontur des Gehäuses der Wasserweiche im Bereich um diese dicht zu verschließende Flüssigkeitsöffnung anpassen und somit weitgehend flüssigkeitsdicht bzw. fugendicht ringsum eine Randzone um diese Flüssigkeitsöffnung anliegen. Ggf. kann es auch zweckmäßig sein, wenn zusätzlich oder unabhängig vom ersten Verschlusselement auch ein zweites Verschlusselement zur Abdichtung ein oder mehrerer axialer Flüssigkeitsöffnung vorgesehen ist, das in analoger Weise wie das erste Abdeckelement federelastisch ausgebildet ist, jetzt aber vorzugsweise unter axialer Federvorsprung gegen die jeweilig zu schließende, axiale Flüssigkeitsöffnung gepresst ist. Im Rahmen der Erfindung wird unter dem Begriff Wasser bzw. Spülflüssigkeit je nach Spülprogrammschritt des jeweilig ablaufenden Geschirrspülprogramms Frisch- oder Brauchwasser wie z. B. im Vorspülgang, mit Reinigerstoffen versetztes Wasser wie z. B. im Reinigungsgang, mit Klarspüler versetztes Wasser wie z. B. im Klarspülgang, und/oder mit sonstigen Zusatzstoffen wie z. B. auch Schmutzteilchen versetztes Wasser verstanden.

### Bezugszeichenliste

- 1: Geschirrspülmaschine
- 2: Spülbehälter
- 3: Bodenwanne
- 4: Pumpe
- 5: Wasserflusssteuereinrichtung, Wasserweiche
- 6: Wasserleitung
- 7: einlassseitiger Anschlussstutzen
- 8: unterer Sprüharm
- 9: oberer Sprüharm
- 10: feststehende Sprüheinrichtung
- 11: Wasserleitung
- 12: auslassseitiger Anschlussstutzen
- 13: Wasserleitung
- 14: auslassseitiger Anschlussstutzen
- 15: Wasserleitung
- 16: auslassseitiger Anschlussstutzen
- 17: Anschlussstutzen
- 18: Gehäuse
- 19: Einlassöffnung
- 20: axiale Auslassöffnung
- 21: axiale Auslassöffnung
- 22: radiale Auslassöffnung
- 23: erstes Verschlusselement
- 24: zweites Verschlusselement
- 25: Dichtungsabschnitt
- 26: federnder Abschnitt
- 27: Versteifungsabschnitt
- 28: Nabe
- 29: Welle
- 30: Antrieb
- 31: Durchtrittsöffnung
- 32: Durchtrittsöffnung
- 33: Durchtrittsöffnung
- 34: Durchtrittsöffnung

- W: Wasser
- DA: Drehachse

## Patentansprüche

1. Geschirrspülmaschine, insbesondere Haushaltsgeschirrspülmaschine mit einer Flüssigkeitsflusssteuereinrichtung (5), welche eine Flüssigkeitseinlassöffnung (19), mindestens eine Flüssigkeitsauslassöffnung (20, 21, 22) und eine drehbar gelagerte Verschlussanordnung (23, 24), die wechselweise in eine von mehreren vorgesehenen Steuerpositionen bewegbar ist, um in einer der Steuerpositionen wenigstens eine der Flüssigkeitsauslassöffnungen (20, 21, 22) zu verschließen, aufweist, **dadurch gekennzeichnet, dass** die Verschlussanordnung (23, 24) ein erstes Verschlusselement (23) mit einem Dichtungsabschnitt (25) umfasst, der bei Einnahme der Steuerposition zum Verschließen einer der Flüssigkeitsauslassöffnungen (22) durch eine Federkraft gegen die zu verschließende Flüssigkeitsauslassöffnung (22) gedrückt ist.

2. Geschirrspülmaschine nach vorstehendem Anspruch, **dadurch gekennzeichnet, dass** das erste Verschlusselement (23) einen elastisch federnden Abschnitt (26) aufweist, der bei Einnahme der Steuerposition zum Verschließen der Flüssigkeitsauslassöffnung (22) elastisch vorgespannt ist, um so die Federkraft zu erzeugen.

3. Geschirrspülmaschine nach Anspruch 2 , **dadurch gekennzeichnet, dass** der elastisch federnde Abschnitt (26) des ersten Verschlusselements (23) in Form eines gebogenen Laschenabschnitts, Streifen- oder Lamellenabschnitts ausgebildet ist.

4. Geschirrspülmaschine nach einem oder mehreren der vorstehenden Ansprüche, **dadurch gekennzeichnet, dass** das erste Verschlusselement (23) eine Nabe (28) aufweist, welche mit einer Welle (29) eines Antriebes (30) drehfest, vorzugsweise formschlüssig, verbunden ist.

5. Geschirrspülmaschine nach einem oder mehreren der vorstehenden Ansprüche, **dadurch gekennzeichnet, dass** das erste Verschlusselement (23) einstückig ausgebildet ist.

6. Geschirrspülmaschine nach einem oder mehreren der vorstehenden Ansprüche, **dadurch gekennzeichnet, dass** der Dichtungsabschnitt (25), der federnde Abschnitt (26), und/oder die Nabe (28) des ersten Verschlusselements (23) im Wesentlichen aus Kunststoff hergestellt ist.

7. Geschirrspülmaschine nach einem oder mehreren der vorstehenden Ansprüche, **dadurch gekennzeichnet, dass** die Flüssigkeitsflusssteuereinrichtung (5) wenigstens eine radial angeordnete Auslassöffnung (22) und/oder wenigstens eine axial angeordnete Auslassöffnung (20, 21) aufweist.

8. Geschirrspülmaschine nach Anspruch 7, **dadurch gekennzeichnet, dass** die Verschlussanordnung (23, 24) das erste Verschlusselement (23) zum Verschließen der radial angeordneten Auslassöffnung (21) und/oder ein zweites Verschlusselement (24) zum Verschließen der axial angeordneten Auslassöffnung (20, 21) aufweist.

9. Geschirrspülmaschine nach Anspruch 8, **dadurch gekennzeichnet, dass** das zweite Verschlusselement (24) als flache Verschlussscheibe (24) mit Durchtrittsöffnungen (31, 32, 33, 34) für Wasser ausgebildet ist.

10. Geschirrspülmaschine nach einem oder mehreren der vorstehenden Ansprüche, **dadurch gekennzeichnet, dass** den Flüssigkeitsauslassöffnungen (20, 21, 22) jeweils ein Anschlussstutzen (12, 14, 16) zugeordnet ist, wobei der Anschlussstutzen (12, 14) der axial angeordneten Auslassöffnung (20, 21) in einem Spülbehälter (2) der Geschirrspülmaschine (1) und der Anschlussstutzen (16) der radial angeordneten Auslassöffnung (22) außerhalb des Spülbehälters (2) angeordnet ist.
